# EUROPEAN PATENT APPLICATION

(11) **EP 4 404 515 A1**
(43) Date of publication of application: **24.07.2024**
(21) Application number: 22866770.5
(22) Date of filing: 09.09.2022
(51) Int. Cl.: H04L 25/02

(54) **REFERENCE SIGNAL SEQUENCE GENERATION METHOD AND APPARATUS, DEVICE, MEDIUM**

(30) Priority: 13.09.2021 CN 202111069497
(71) Applicant: Vivo Mobile Communication Co., Ltd., Dongguan, Guangdong 523863 (CN)
(72) Inventor: SUN, Bule, Dongguan, Guangdong 523863 (CN); SUN, Peng, Dongguan, Guangdong 523863 (CN)
(74) Representative: Murgitroyd & Company
(86) International application number: PCT/CN2022/118191
(87) International publication number: WO 2023/036309

(57) **Abstract**

This application discloses a reference signal sequence generation method and apparatus, a device, and a medium. The reference signal sequence generation method in embodiments of the application includes: obtaining, by a first device, a target neural network; and obtaining, by the first device, a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer.

## Description

This application claims priority to Chinese Patent Application No. 202111069497.9, filed with the China National Intellectual Property Administration on September 13, 2021 and entitled "REFERENCE SIGNAL SEQUENCE GENERATION METHOD AND APPARATUS, DEVICE, AND MEDIUM", which is incorporated herein by reference in its entirety.

### TECHNICAL FIELD

This application pertains to the field of communication technologies, and specifically, relates to a reference signal sequence generation method and apparatus, a device, and a medium.

### BACKGROUND

At present, in new radio (New Radio, NR), a device 1 (for example, a transmit end) can generate a reference signal using a pseudo noise (Pseudo Noise, PN) sequence (or Zadoff-Chu sequence) and send the reference signal to a device 2 (for example, a receive end) through a channel, so that the receive end can perform channel estimation or channel detection based on the reference signal, and perform wireless communication with the transmit end based on a channel estimation or channel detection result.

However, when passing through the channel, the reference signal may be affected by noise and interference on the channel, resulting in an inaccurate channel estimation or channel detection result at the receive end. Consequently, the transmit end may be unable to perform wireless communication with the receive end, leading to poor communication reliability for devices.

### SUMMARY

Embodiments of this application provide a reference signal sequence generation method and apparatus, a device, and a medium, so as to resolve the problem of poor communication reliability for devices.

According to a first aspect, a reference signal sequence generation method is provided, and the method includes: obtaining, by a first device, a target neural network; and obtaining, by the first device, a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer.

According to a second aspect, a reference signal sequence generation apparatus is provided. The reference signal sequence generation apparatus is a first reference signal sequence generation apparatus, and the reference signal sequence generation apparatus includes: an obtaining module; where the obtaining module is configured to obtain a target neural network; and obtain a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer.

According to a third aspect, a reference signal sequence generation method is provided, and the method includes: receiving, by a second device, at least one third reference signal sequence from at least one third device, where the at least one third reference signal sequence includes a first reference signal sequence sent by a first device; performing, by the second device, a third operation based on each third reference signal sequence to obtain a corresponding fourth reference signal sequence; and sending, by the second device, a second channel estimation value to the first device; where the second channel estimation value is a channel estimation value obtained by the second device through channel estimation based on a fourth reference signal sequence corresponding to the first device; and the second channel estimation value is used for training performed by the first device to obtain a target neural network; and the target neural network is used for generating a target reference signal sequence.

According to a fourth aspect, a reference signal sequence generation apparatus is provided. The reference signal sequence generation apparatus is a second reference signal sequence generation apparatus, and the reference signal sequence generation apparatus includes: a receiving module, an execution module and a sending module; where the receiving module is configured to receive at least one third reference signal sequence from at least one third reference signal sequence generation apparatus, where the at least one third reference signal sequence includes a first reference signal sequence sent by a first reference signal sequence generation apparatus in the at least one third reference signal sequence generation apparatus; the execution module is configured to perform a third operation based on each third reference signal sequence received by the receiving module to obtain a corresponding fourth reference signal sequence; and the sending module is configured to send a second channel estimation value to the first reference signal sequence generation apparatus; where the second channel estimation value is a channel estimation value obtained by the second reference signal sequence generation apparatus through channel estimation based on a fourth reference signal sequence corresponding to the first reference signal sequence generation apparatus; and the second channel estimation value is used for training performed by the first reference signal sequence generation apparatus to obtain a target neural network; and the target neural network is used for generating a target reference signal sequence.

According to a fifth aspect, a terminal is provided, where the terminal includes a processor, a memory, and a program or instructions stored in the memory and executable on the processor, and when the program or the instructions are executed by the processor, the steps of the method according to the first aspect are implemented, or the steps of the method according to the third aspect are implemented.

According to a sixth aspect, a network-side device is provided, where the network-side device includes a processor, a memory, and a program or instructions stored in the memory and executable on the processor, and when the program or the instructions are executed by the processor, the steps of the method according to the first aspect are implemented, or the steps of the method according to the third aspect are implemented.

According to a seventh aspect, a terminal is provided, where the terminal includes a processor and a communication interface. The processor is configured to obtain a target neural network; and obtain a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer.

According to an eighth aspect, a terminal is provided, where the terminal includes a processor and a communication interface. The communication interface is configured to receive at least one third reference signal sequence from at least one third device, and the at least one third reference signal sequence includes a first reference signal sequence sent by a first device. The processor is configured to perform a third operation based on each third reference signal sequence to obtain a corresponding fourth reference signal sequence; and the communication interface is further configured to send a second channel estimation value to the first device. The second channel estimation value is a channel estimation value obtained by the terminal based on a fourth reference signal sequence corresponding to the first device; and the second channel estimation value is used for training performed by the first device to obtain a target neural network. The target neural network is used for generating a target reference signal sequence.

According to a ninth aspect, a network-side device is provided, where the network-side device includes a processor and a communication interface. The processor is configured to obtain a target neural network; and obtain a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer.

According to a tenth aspect, a network-side device is provided, where the network-side device includes a processor and a communication interface. The communication interface is configured to receive at least one third reference signal sequence from at least one third device, and the at least one third reference signal sequence includes a first reference signal sequence sent by a first device. The processor is configured to perform a third operation based on each third reference signal sequence to obtain a corresponding fourth reference signal sequence; and the communication interface is further configured to send a second channel estimation value to the first device. The second channel estimation value is a channel estimation value obtained by the network-side device based on a fourth reference signal sequence corresponding to the first device; and the second channel estimation value is used for training performed by the first device to obtain a target neural network. The target neural network is used for generating a target reference signal sequence.

According to an eleventh aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to a twelfth aspect, a chip is provided, where the chip includes a processor and a communication interface, the communication interface is coupled to the processor, and the processor is configured to run a program or instructions to implement the method according to the first aspect or implement the method according to the third aspect.

According to a thirteenth aspect, a computer program/program product is provided, where the computer program/program product is stored in a non-volatile storage medium, and the program/program product is executed by at least one processor to implement the steps of the method according to the first aspect or the steps of the method according to the third aspect.

In the embodiments of the application, the first device can obtain a target neural network; and obtain a target reference signal sequence based on the target neural network; where the target neural network includes N target neuron groups, and N target weight parameters of the N target neuron groups are in one-to-one correspondence to N target elements of the target reference signal sequence. Because the first device obtains the target reference signal sequence based on the target neural network, and the N target weight parameters of the target neural network are in one-to-one correspondence to the N target elements, instead of generating a reference signal sequence by using a PN sequence (or a Zadoff-Chu sequence), the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for devices.

### BRIEF DESCRIPTION OF DRAWINGS

FIG. 1 is a block diagram of a wireless communication system according to an embodiment of this application;
FIG. 2 is a first schematic diagram of a reference signal sequence generation method according to an embodiment of this application;
FIG. 3 is a second schematic diagram of a reference signal sequence generation method according to an embodiment of this application;
FIG. 4 is a third schematic diagram of a reference signal sequence generation method according to an embodiment of this application;
FIG. 5 is a schematic diagram of a real parameter and an imaginary parameter of elements of a first reference sequence signal obtained through calculation according to an embodiment of this application;
FIG. 6 is a fourth schematic diagram of a reference signal sequence generation method according to an embodiment of this application;
FIG. 7 is a fifth schematic diagram of a reference signal sequence generation method according to an embodiment of this application;
FIG. 8 is a schematic structural diagram of a first reference signal sequence generation apparatus according to an embodiment of this application;
FIG. 9 is a schematic structural diagram of a second reference signal sequence generation apparatus according to an embodiment of this application;
FIG. 10 is a schematic structural diagram of a communication device according to an embodiment of this application;
FIG. 11 is a schematic diagram of a hardware structure of a terminal according to an embodiment of this application; and
FIG. 12 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The following describes terms related to the embodiments of this application.

### 1. Neural network

A neural network is composed of multiple neurons, where each neuron in the multiple neurons includes a weight parameter.

In a neural network training process, each neuron can receive input information, and process the input information based on an activation function to output processed information, so as to determine a loss function based on a deviation degree between the processed information and the real information, and then correct the weight parameter of each neuron by using an optimization algorithm, and so on, so as to obtain a trained neural network.

The optimization algorithm is an algorithm for minimizing or maximizing the loss function. The optimization algorithm can include any one of the following: gradient descent algorithm, random gradient descent algorithm, mini-batch gradient descent algorithm, momentum, random gradient descent algorithm with momentum, adaptive gradient descent algorithm, root mean squared error deceleration algorithm, adaptive momentum estimation algorithm, and the like.

### 2. Reference signal

Reference signal (Reference Signal, RS), that is, reference signal sequence, is an important part of system design. Reference signals include downlink reference signals and uplink reference signals.

The downlink reference signal is used for channel state information measurement, data demodulation, beam training, time-frequency parameter tracking, and so on.

The uplink reference signal is used for uplink and downlink channel measurement, data demodulation, and the like.

### 3. Other terms

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

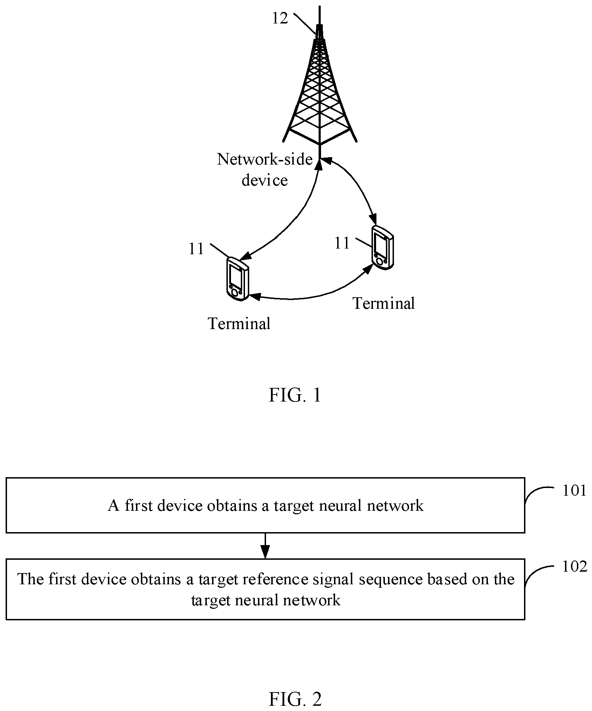

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (VUE), pedestrian user equipment (PUE), and a smart home device (a home device with wireless communication function, such as refrigerator, television, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a reference signal sequence generation method provided in the embodiments of this application by using some embodiments and application scenarios thereof with reference to the accompanying drawings.

FIG. 2 is a flowchart of a reference signal sequence generation method according to an embodiment of this application. As shown in FIG. 2, the reference signal sequence generation method provided in this embodiment of this application may include the following steps 101 and 102.

Step 101: A first device obtains a target neural network.

Optionally, in this embodiment of this application, the first device may be user equipment (User Equipment, UE) or a network-side device.

Optionally, in this embodiment of this application, the target neural network is obtained through training based on channel information of the first device.

Optionally, in this embodiment of the application, the target neural network may be any one of the following: a fully connected neural network, a convolutional neural network, a cyclic neural network, a residual neural network, a generated countermeasure neural network, and the like. It should be noted that in this embodiment of this application, using the target neural network being a fully connected neural network as an example, the target neural network may alternatively be other neural networks, and those skilled in the art can perform selection according to their needs, and this is not limited in this embodiment of this application.

Optionally, in this embodiment of the application, the target neural network may be a neural network pre-stored in the first device. Specifically, the pre-stored neural network may be a neural network obtained through training by the first device.

Further optionally, in this embodiment of this application, the target neural network may be a neural network determined by the first device from trained neural networks pre-stored in the first device. It can be understood that the first device may pre-store at least one trained neural network, and select a neural network from the at least one neural network according to requirements.

The following describes how the first device determines the target neural network from the pre-stored neural networks.

Optionally, in this embodiment of this application, the foregoing step 101 may be specifically implemented by step 101a described below.

Step 101a: The first device determines a target neural network based on a second physical parameter;.

In this embodiment of the application, the second physical parameter includes at least one of the following:
bundling size (bundling size);
resource block (Resource Block, RB);
physical resource block (Physical Resource Block, PRB);
the number of multi-users (Multi-User MIMO, MU); and
density in a time-frequency domain in a time-frequency domain pattern (pattern) of a reference signal sequence.

Further optionally, in this embodiment of this application, the first device may determine a target neural network corresponding to the second physical parameter from at least one third neural network based on X first correspondences. Each first correspondence is a correspondence between one physical parameter and one third neural network, and X is a positive integer. The at least one third neural network is a trained neural network pre-stored in the first device.

Specifically, the first device can determine one physical parameter that matches the second physical parameter from the X physical parameters, and then determine one third neural network corresponding to the one physical parameter as the target neural network.

In this embodiment of this application, when the first device is at a reasoning stage (that is, when the reference signal sequence needs to be used for wireless communication), because parameters (such as length) of the reference signal sequence that the first device needs to use may be different, the first device can determine, according to the requirements, a target neural network that needs to be used from the at least one third neural network pre-stored.

In this way, it can be learned that because the target neural network to be used can be determined based on the second physical parameter, instead of obtaining the reference signal sequence based on a fixed neural network, accuracy of a reference signal sequence required by the first device that is obtained can be improved.

In this embodiment of the application, the target neural network includes N target neuron groups, and each target neuron group in the N target neuron groups corresponds to one target weight parameter, N being a positive integer.

Optionally, in this embodiment of this application, for each target weight parameter in the N target weight parameters, one target weight parameter may be a real parameter (that is, a real number) or a parameter without quantization.

Further optionally, in this embodiment of this application, each target weight parameter in the N target weight parameters may be a complex number.

Optionally, in this embodiment of this application, each target neuron group in the N target neuron groups includes at least one neuron. Each neuron includes one sub-weight parameter. The target weight parameter corresponding to each target neuron group is determined based on sub-weight parameters of neurons included in the target neuron group.

For example, it is assumed that the N target neuron groups include a target neuron group 1 and a target neuron group 2, the target neuron group 1 includes neuron 1, neuron 2, and neuron 3, and the target neuron group 2 includes neuron 4, neuron 5, and neuron 6. In this case, target weight parameters corresponding to the target neuron group 1 are determined based on a sub-weight parameter of neuron 1, a sub-weight parameter of neuron 2, and a sub-weight parameter of neuron 3; and target weight parameters corresponding to the target neuron group 2 are determined based on a sub-weight parameter of neuron 4, a sub-weight parameter of neuron 5, and a sub-weight parameter of neuron 6.

Further optionally, in this embodiment of this application, each target neuron group in the N target neuron groups includes: a part of neurons with sub-weight parameters being real parameters and another part of neurons with sub-weight parameters being imaginary parameters. In this way, real parameters of the target weight parameters corresponding to each target neuron group can be determined based on the sub-weight parameters of the part of neurons, and imaginary parameters of the target weight parameters corresponding to each target neuron group can be determined based on the sub-weight parameters of the another part of neurons.

The following provides description by using an example in which the part of neurons with sub-weight parameters being real parameters are L first neurons, and the another part of neurons with sub-weight parameters being imaginary parameters are M second neurons.

Optionally, in this embodiment of this application, each target neuron group in the N target neuron groups includes L first neurons and M second neurons, each first neuron in the L first neurons corresponds to one first real parameter, and each second neuron in the M second neurons corresponds to one first imaginary parameter, Land M being positive integers.

It can be understood that for each first neuron in the L first neurons, a sub-weight parameter of one first neuron may be: a corresponding first real parameter; and for each second neuron in the M second neurons, a sub-weight parameter of one second neuron may be: a corresponding second real parameter.

In this embodiment of this application, the target weight parameter corresponding to each target neuron group is determined based on L first real parameters and M first imaginary parameters.

Further optionally, in this embodiment of this application, L=M.

Further optionally, in this embodiment of this application, the first device may determine the real parameters of the target weight parameters corresponding to each target neuron group by using a first algorithm based on the L first real parameters, and determine the imaginary parameters of the target weight parameters corresponding to each target neuron group by using a second algorithm based on the M second real parameters, so as to obtain the target weight parameters corresponding to each target neuron group.

Specifically, the first algorithm may be at least one of the following: addition, subtraction, multiplication, division, averaging, and the like. The second algorithm can be at least one of the following: addition, subtraction, multiplication, division, averaging, and the like. The second algorithm and the first algorithm may be the same or different.

In this embodiment of this application, the channel information includes any one of the following: a channel vector and a channel matrix.

Optionally, in a possible implementation of this embodiment of this application, the channel information is determined by the first device based on a data sequence received by the first device.

Optionally, in another possible implementation of this embodiment of this application, the channel information is received by the first device from a second device.

Optionally, in this embodiment of the application, the channel information may include at least one element, and each element in the at least one element may be any one of the following: real number, imaginary number, and complex number.

Step 102: The first device obtains a target reference signal sequence based on the target neural network.

In this embodiment of the application, the target reference signal sequence includes N target elements in one-to-one correspondence to N target weight parameters.

Optionally, in this embodiment of this application, the first device may separately determine the N target weight parameters of the N target neuron groups as a corresponding target element to generate a target reference signal sequence.

Further optionally, in this embodiment of the application, the first device may determine a target weight parameter of the 1 st target neuron group as the 1 st target element, determine a target weight parameter of the 2nd target neuron group as the 2nd target element, determine a target weight parameter of the 3rd target neuron group as the 3rd target element, and so on, until a target weight parameter of the last target neuron group is determined as the last target element, so as to obtain the target reference signal sequence.

It can be understood that the number of N target neuron groups of the target neural network is the same as a length of the target reference signal sequence; and the number of neurons in the target neural network is at least twice the length of the target reference signal sequence.

For example, the number of neurons of the target neural network is twice the length of the target reference signal sequence

Optionally, in this embodiment of this application, after the first device obtains the target reference signal sequence, the first device can perform the foregoing steps 101 and 102 again based on requirements, that is, obtain other neural networks, and obtain other reference signal sequences based on the other neural networks.

In this embodiment of this application, a target neural network is pre-stored in the first device, and the target neural network is obtained through training based on the channel information of the first device, so that the first device can obtain the target neural network and determine the target weight parameters corresponding to the target neuron group of the target neural network as the target elements of the reference signal sequence, to generate the target reference signal sequence.

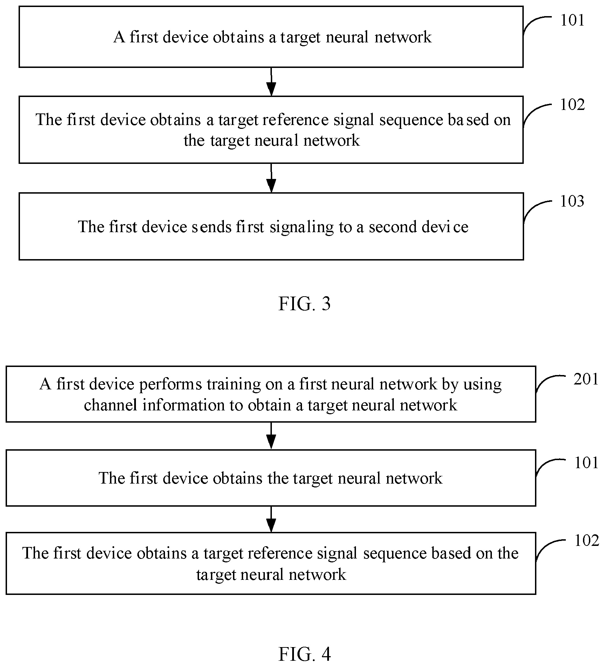

Optionally, in this embodiment of this application, with reference to FIG. 2, as shown in FIG. 3, the reference signal sequence generation method provided in this embodiment of the present invention may further include the following step 103 after the foregoing step 102.

Step 103: The first device sends first signaling to the second device.

Optionally, in this embodiment of this application, the first signaling includes at least one of the following:
radio resource control (Radio Resource Control, RRC) signaling;
layer 1 signaling of physical downlink control channel (Physical Downlink Control Channel, PDCCH);
physical downlink shared channel (Physical Downlink Shared Channel, PDSCH) information;
medium access control control element (Medium Access Control Control Element, MAC CE) signaling;
system information block (System Information Block, SIB);
layer 1 signaling of physical uplink control channel (Physical Uplink Control Channel, PUCCH);
target message information of physical random access channel (Physical Random Access Channel, PRACH);
physical uplink shared channel (Physical Uplink Shared Channel, PUSCH) information;
XN interface signaling;
PC5 interface signaling; and
sidelink (Sidelink) interface instruction.

In this embodiment of this application, the target message includes at least one of the following: message (Message, MSG) 1 information, MSG 2 information, MSG 3 information, MSG 4 information, MSG A information, and MSG B information.

In this embodiment of this application, the first signaling carries the target reference signal sequence, or an identifier of the target reference signal sequence, or information obtained by compressing the target reference signal sequence.

In this embodiment of this application, the second device may be UE or a network-side device.

Further optionally, in this embodiment of this application, in a case that the first device is UE, the second device is a network-side device; and in a case that the first device is a network-side device, the second device is UE.

It can be understood that the first device may send the target reference signal sequence (or an identifier of the target reference signal sequence) to the second device, so that the second device can perform operations related to channel estimation or signal detection based on the target reference signal sequence.

Further optionally, in this embodiment of this application, after the first device generates other reference signal sequences, the first device can perform the foregoing step 103 again. It can be understood that if the reference signal sequence generated by the first device changes, the first device may send the changed reference signal sequence to the second device via the first signaling.

In this way, it can be learned that the first device may send the first signaling carrying the target reference signal sequence (or the identifier of the target reference signal sequence) to the second device, so that the second device can perform channel estimation based on the target reference signal sequence, thereby improving communication reliability for the first device.

In the reference signal sequence generation method provided in this embodiment of the application, the first device may obtain the target neural network and obtain the target reference signal sequence based on the target neural network, where the target neural network includes N target neuron groups, and N target weight parameters of the N target neuron groups are in one-to-one correspondence to N target elements of the target reference signal sequence. Because the first device obtains the target reference signal sequence based on the target neural network, and the N target weight parameters of the target neural network are in one-to-one correspondence to the N target elements, instead of generating a reference signal sequence by using a PN sequence (or a Zadoff-Chu sequence), the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for the first device.

The following describes how the first device obtains the target neural network by using an example.

Optionally, in this embodiment of this application, with reference to FIG. 2, as shown in FIG. 4, the reference signal sequence generation method provided in this embodiment of the present invention may further include the following step 201 before the foregoing step 101.

Step 201: The first device performs training on a first neural network by using the channel information to obtain the target neural network.

Further optionally, in this embodiment of this application, the first neural network may be an untrained neural network pre-stored in the first device.

Further optionally, in this embodiment of this application, the first neural network may include one neural network or a plurality of neural networks.

It should be noted that the foregoing "the first neural network includes a plurality of neural networks" can be understood as follows: the plurality of neural networks included in the first neural network each can output processed information based on input information, that is, the plurality of neural networks are set relatively independently.

The following describes how the first device determines the first neural network by using an example.

Optionally, in this embodiment of this application, the reference signal sequence generation method provided in this embodiment of this application may further include the following step 301 before the foregoing step 201.

Step 301: The first device determines a first neural network based on a first physical parameter.

In this embodiment of the application, the first physical parameter includes at least one of the following:
bundling size;
RB;
PRB;
the number of MUs; and
density in a time-frequency domain in a time-frequency domain pattern of a reference signal sequence.

Further optionally, in this embodiment of this application, the first device may determine a first neural network corresponding to the first physical parameter from at least one fourth neural network based on Y second correspondences. Each second correspondence is a correspondence between one physical parameter and one fourth neural network, and Y is a positive integer.

Specifically, the first device can determine one physical parameter that matches the first physical parameter from the Y physical parameters, and then determine one fourth neural network corresponding to the one physical parameter as the first neural network.

In this way, it can be learned that because the first device can determine, based on the first physical parameter, the first neural network that needs to be trained, instead of training a fixed neural network, different neural networks can be obtained, so that the first device can obtain different reference signal sequences based on the different neural networks, thereby improving accuracy of a reference signal sequence required by the first device.

Optionally, in this embodiment of this application, the channel information includes Q first elements, where Q is a positive integer. Specifically, the foregoing step 201 may be specifically implemented by the following step 201a to step 201c.

Step 201a: The first device inputs Q first elements into the first neural network to generate a first reference signal sequence

Optionally, in this embodiment of the application, the first neural network includes N first neuron groups, and each first neuron group in the N first neuron groups corresponds to one first weight parameter; where the first reference signal sequence is obtained through multiplication operation based on Q first elements and N first weight parameters.

It should be noted that the foregoing "multiplication operation" is not limited to multiplication of real parameters, and may also be multiplication of complex parameters; and is not limited to multiplication of elements, and may be a product in any broad range, such as inner product, outer product, product of matrices in a matrix set, Hadamard (Hadamard) product of matrices, Kroneck product of matrices, outer product of tensors, tensor product of tensors, point-by-point product, and so on.

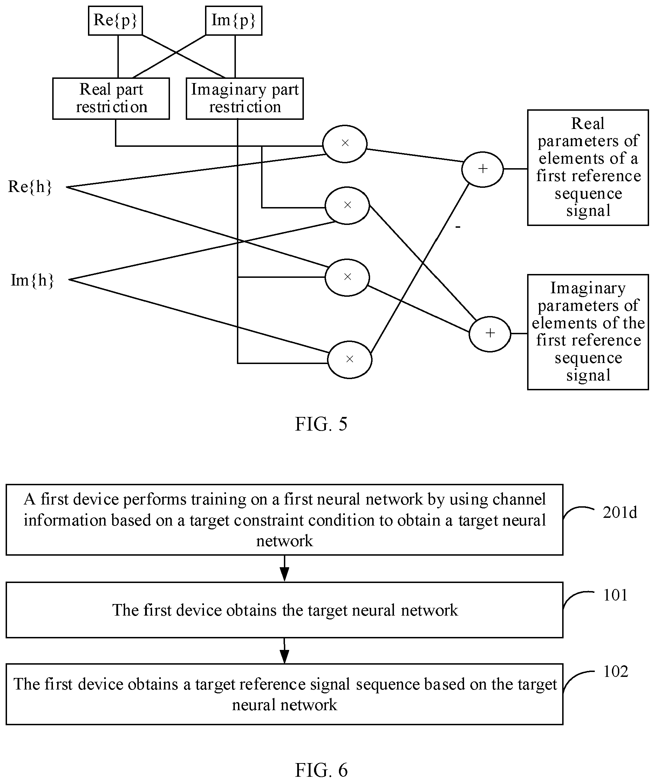

For example, Q first elements being one first element (for example, h) and N first weight parameters being one first weight parameter (for example, p) are used as an example. As shown in FIG. 5, h includes a real parameter (for example, Re{h}) and an imaginary parameter (for example, Im{h}), and p includes a real parameter (for example, Re{p}) and an imaginary parameter (for example, Im{p}), so that the first device can obtain the real parameter and imaginary parameter of the elements of the first reference sequence signal by multiplication operation based on p and h, so as to obtain the first reference signal sequence. Re{} means taking a real part of elements in brackets, Im{} means to take an imaginary part of elements in brackets, "x" means point multiplication, "+" means addition, and "-" means subtraction.

In a case that the first neural network includes different quantities of neural networks, a process of generating the first reference signal sequence by the first device may be different. The following provides description separately by using the first neural network including one neural network or including a plurality of neural networks as examples.

For a case that the first neural network includes one neural network:

Optionally, in this embodiment of this application, each first element in the Q first elements corresponds to one second real parameter and one second imaginary parameter; and the first reference signal sequence includes N second elements. Specifically, the foregoing step 201a may be specifically implemented by steps 201a1 and 201a2 described below.

Step 201al: The first device inputs Q second real parameters and Q second imaginary parameters into the first neural network to obtain N third real parameters and N third imaginary parameters for outputting.

Further optionally, in this embodiment of this application, after the first device inputs Q second real parameters and Q second imaginary parameters into the first neural network, the first neural network can use N third real parameters and N third imaginary parameters calculated by multiplication operation based on the Q second real parameters and Q second imaginary parameters.

It can be understood that N third real parameters are real parameters of elements of the first reference sequence signal and N third imaginary parameters are imaginary parameters of elements of the first reference sequence signal.

Step 201a2: The first device determines the N second elements based on the N third real parameters and the N third imaginary parameters.

Further optionally, in this embodiment of the application, the first device can determine one second element based on one third real parameter and one third imaginary parameter, determine another second element based on another third real parameter and another third imaginary parameter, and so on, until the last second element is determined based on the last third real parameter and the last third imaginary parameter, so as to determine N second elements to obtain the first reference signal sequence

In this way, it can be learned that the first device can input Q second real parameters and Q second imaginary parameters into the first neural network to obtain the real parameters and imaginary parameters of the elements of the first reference signal sequence, that is, to obtain the real parameters and imaginary parameters of the elements of the reference signal sequence having passed through the channel, so as to obtain the first reference signal sequence having passed through the channel; therefore, the first device can perform training on the first neural network based on the first reference signal sequence to obtain the target neural network with a stronger anti-noise capability and anti-interference capability, thereby improving communication reliability for the first device.

For a case that the first neural network includes a plurality of neural networks:

Optionally, in this embodiment of this application, the first neural network includes: R second neural networks, R being a positive integer greater than 1. Specifically, the foregoing step 201a may be specifically implemented by steps 201a3 to 201a5 described below.

Step 201a3: The first device determines R element groups based on Q first elements.

In this embodiment of the application, different first elements are included in different element groups.

Further optionally, in this embodiment of this application, the first device may determine a first value (for example, k) based on a quantity of Q first elements (that is, Q) and a quantity of R second neural networks (that is, R), and then determine every k first elements as one element group, so as to obtain R element groups; where the first value is an integer.

It can be understood that each element group in the R element groups includes at least one first element, and the number of first elements included in each element group may be the same or different.

Specifically, the first device may determine the first value based on a ratio of Q to R.

For example, assuming that Q first elements include element 1, element 2, element 3, element 4, element 5, and element 6, and that R second neural networks include neural network 1 and neural network 2, the first device may determine a first value, that is, 6/2=3, based on a ratio of the quantity of Q first elements (that is, 6) to the quantity of R second neural networks (that is, 2); and then determine every three first elements as one element group, that is, determining element 1, element 2, and element 3 as one element group, and determining element 4, element 5, and element 6 as another element group, so as to obtain two element groups.

For another example, assuming that Q first elements include element 1, element 2, element 3, element 4, and element 5, and that R second neural networks include neural network 1 and neural network 2, the first device may determine a first value, that is, 3, based on a ratio of the quantity of Q first elements (that is, 5) to the quantity of R second neural networks (that is, 2), that is, 5/2=2.5; and then determine every three first elements as one element group, that is, determining element 1, element 2, and element 3 as one element group, and determining element 4 and element 5 as another element group, so as to obtain two element groups.

Step 201a4: The first device inputs each element group into each second neural network to generate a second reference signal sequence corresponding to each second neural network, so as to obtain R second reference signal sequences.

Further optionally, in this embodiment of the application, the first device may input the 1st element group into the 1st second neural network to generate the 1st second reference signal sequence, elements of the 1st second reference signal sequence being output by the 1st second neural network, input the 2nd element group into the 2nd second neural network to generate the 2nd second reference signal sequence, elements of the 2nd second reference signal sequence being output by the 2nd second neural network, and so on, until the last element group is input into the last second neural network to generate the last second reference signal sequence, elements of the last second reference signal sequence being output by the last second neural network, so as to obtain R second reference signal sequences.

Step 201a5: The first device performs a second operation based on the R second reference signal sequences to generate the first reference signal sequence.

In this embodiment of the application, the second operation includes at least one of the following:
adding noise, superimposing the R second reference signal sequences, and splicing the R second reference signal sequences

In this way, it can be learned that the first device can divide Q first elements into R element groups, input the R element groups into R second neural networks to generate R second reference signal sequences, and based on the R second reference signal sequences, perform the operation of adding noise (and/or superimposing the R second reference signal sequences, and/or splicing the R second reference signal sequences) to obtain the first reference signal sequences having passed through different channels. Therefore, first device can perform training on the first neural network based on the first reference signal sequence to obtain a target neural network that can generate a strong anti-noise capability and a strong anti-interference capability, thereby improving communication reliability for the first device.

Step 201b: The first device determines the target loss function based on the target channel estimation value.

In this embodiment of this application, the target channel estimation value is obtained through estimation based on the first reference signal sequence.

Further optionally, in this embodiment of this application, the target channel estimation value may be obtained by the first device (or other devices (such as the second device in the following embodiments)) through channel estimation based on the first reference signal sequence.

Optionally, in this embodiment of this application, the target channel estimation value includes any one of the following:
a first channel estimation value obtained by the first device through channel estimation based on the first reference signal sequence; and
a second channel estimation value received by the first device from a second device.

In this embodiment of this application, the second channel estimation value is a channel estimation value obtained by the second device through channel estimation based on the first reference signal sequence in a case that the second device receives the first reference signal sequence from the first device.

Further optionally, in this embodiment of this application, the first device may use a first channel estimation value obtained through channel estimation based on the first reference signal sequence by using a fifth neural network, so as to obtain the target channel estimation value.

It can be understood that output of the first neural network is connected to input of the fifth neural network.

Specifically, the fifth neural network and the first neural network may be considered as one large untrained neural network, where the one large untrained neural network is all deployed in the first device.

Further optionally, in this embodiment of this application, the second channel estimation value is a channel estimation value obtained by the second device through channel estimation based on the first reference signal sequence by using a sixth neural network, in a case that the second device receives the first reference signal sequence from the first device.

It can be understood that output of the first neural network is connected to input of the sixth neural network.

Specifically, the sixth neural network and the first neural network may be considered as one large untrained neural network, where part of the one large untrained neural network is deployed in the first device, and another part is deployed in the second device.

Specifically, the first device can send the first reference signal sequence to the second device, so that the second device can perform channel estimation based on the first reference signal sequence in a case of receiving the first reference signal sequence, and send channel feedback information to the first device, where the channel feedback information includes the second channel estimation value. In this way, the first device can recover the second channel estimation value based on the channel feedback information to obtain the target channel estimation value.

In this embodiment of this application, the target loss function is used for representing a deviation degree between the target channel estimation value and a channel true value; and the channel true value is determined based on the channel information.

Optionally, in this embodiment of this application, the target loss function includes a first parameter between the target channel estimation value and the channel true value.

In this embodiment of this application, the first parameter includes at least one of the following: mean squared error, normalized mean squared error, norm, correlation coefficient, and cosine similarity.

It can be understood that the first device can construct an optimization target (that is, a target loss function) in supervision learning based on the target channel estimation value, and the optimization target may be one or more of the following:
a mean squared error between the target channel estimation value and the channel true value;
a normalized mean squared error between the target channel estimation value and the channel true value;
a norm between the target channel estimation value and the channel true value; and
a correlation index between the target channel estimation value and the channel true value.

The correlation index includes at least one of the following: a correlation coefficient, a cosine similarity, and the like.

Optionally, in this embodiment of this application, the target loss function includes a second parameter obtained after performing a first operation using the target channel estimation value.

In this embodiment of this application, the first operation is a subsequent operation of channel estimation in a wireless communication system.

Optionally, in this embodiment of this application, the first operation includes any one of the following: signal detection, precoding, and beamforming.

The second parameter is used to represent at least one of the following: wireless communication transmission accuracy rate and wireless communication transmission efficiency.

Optionally, in this embodiment of the application, the second parameter includes at least one of the following: wireless communication transmission error bit rate, wireless communication transmission error block probability, wireless communication transmission signal-to-noise ratio, wireless communication transmission signal-to-interference-to-noise ratio, wireless communication transmission spectrum efficiency, and wireless communication transmission throughput.

The first operation includes but is not limited to signal detection, precoding, and beamforming.

It can be understood that the first device (or other devices (such as the second device in the following embodiments)) can construct an optimization target (that is, a target loss function) in non supervision learning based on the target channel estimation value, and the optimization target may be one or more of the following:
an error bit probability obtained after a signal detection related operation (such as signal detection, precoding, or beamforming) is performed by using the target channel estimation value;
an error block probability obtained after a signal detection related operation (such as signal detection, precoding, or beamforming) is performed by using the target channel estimation value;
a signal-to-noise ratio obtained after a signal detection related operation (such as signal detection, precoding, or beamforming) is performed by using the target channel estimation value;
a signal-to-interference-to-noise ratio obtained after a signal detection related operation (such as signal detection, precoding, or beamforming) is performed by using the target channel estimation value;
a spectrum efficiency obtained after a signal detection related operation (such as signal detection, precoding, or beamforming) is performed by using the target channel estimation value; and
a throughput obtained after a signal detection related operation (such as signal detection, precoding, or beamforming) is performed by using the target channel estimation value.

Further optionally, in this embodiment of this application, the first device (or other devices) may obtain the second parameter after performing the first operation based on the target channel estimation value.

Specifically, in a possible implementation, the first device can send the first reference signal sequence to the second device, so that the second device can perform channel estimation based on the first reference signal sequence in a case of receiving the first reference signal sequence, and send channel feedback information to the first device, where the channel feedback information includes the second channel estimation value. In this way, the first device can recover the second channel estimation value based on the channel feedback information to obtain the target channel estimation value, and perform the first operation by using the target channel estimation value to obtain the second parameter. In this way, the first device can obtain the target loss function.

Specifically, in another possible implementation, the first device can send the first reference signal sequence to the second device, so that the second device can perform channel estimation based on the first reference signal sequence in a case of receiving the first reference signal sequence to obtain the second channel estimation value, so as to obtain the target channel estimation value, and then perform the first operation by using the target channel estimation value to obtain the second parameter, so as to obtain the target loss function. In this way, the second device can send the target loss function to the first device, so that the first device can obtain the target loss function.

Step 201c: The first device performs training on a first neural network based on the target loss function to obtain the target neural network.

Further optionally, in this embodiment of this application, the first device may perform training on the first neural network based on the target loss function by using an optimization algorithm.

In this way, it can be learned that because the first device can input Q first elements into the first neural network to generate the first reference signal sequence having passed through the channel, determine the target loss function based on the target channel estimation value that is obtained by the first device (or other devices) based on the first reference signal sequence, and perform training on the first neural network based on the target loss function, so as to obtain the target neural network with a stronger anti-noise capability and anti-interference capability, thereby improving communication reliability for the first device.

Optionally, in this embodiment of this application, with reference to FIG. 4, as shown in FIG. 6, the foregoing step 201 may be specifically implemented by step 201d described below.

Step 201d: The first device performs training on a first neural network by using the channel information based on a target constraint condition to obtain the target neural network.

In this embodiment of this application, the target constraint condition includes any one of the following that:
a power value corresponding to each target weight parameter in N target weight parameters is a first preset value; and
a total power value corresponding to the N target weight parameters is less than or equal to a second preset value.

In this embodiment of this application, in an actual communication system, values of elements of a reference signal sequence are generally limited, and not any values are acceptable. For example, specific restrictions include constant modulus restriction (for example, the power of each element of the reference signal sequence is 1), total power restriction (for example, the total power of the reference signal sequence is less than or equal to a specific value), and so on.

When the constant modulus restriction is used, the first device can calculate, based on the real parameter and imaginary parameter of each target weight parameter, a power of the target element corresponding to each target weight parameter, and then perform normalization processing on the real parameter and imaginary parameter.

When a total power limit is used, the first device can calculate a total power of the whole target reference signal sequence (that is, N target weight parameters), and adjust the real parameter and imaginary parameter of each target weight parameter in combination with the total power limit.

It should be noted that for the description that the first device performs training on the first neural network by using the channel information, reference may be made to the specific description in the foregoing embodiment, and details are not repeated in this embodiment of this application.

In this way, it can be learned that because the first device performs training on the first neural network based on the target constraint condition, a case that the values of the elements of the target reference signal sequence exceed the limit can be avoided, thereby improving communication reliability for the first device.

It should be noted that, for the reference signal sequence generation method provided in the embodiments of this application, the execution body may be a first device, or a control module for executing the reference signal sequence generation method in the first device. In the embodiments of this application, the reference signal sequence generation method being performed by the first device is used as an example to describe the first device provided in the embodiments of this application.

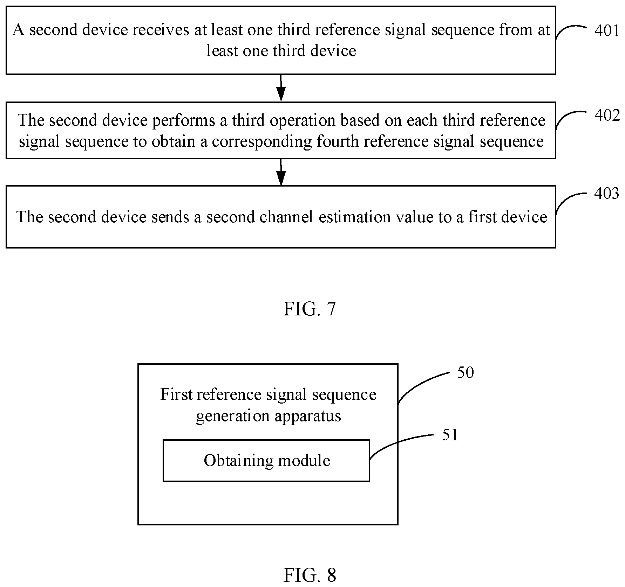

FIG. 7 is a flowchart of a reference signal sequence generation method according to an embodiment of this application. As shown in FIG. 7, the reference signal sequence generation method provided in this embodiment of this application may include the following steps 401 to 403.

Step 401: A second device receives at least one third reference signal sequence from at least one third device.

In this embodiment of the application, at least one third reference signal sequence includes a first reference signal sequence sent by a first device in the at least one third device.

Optionally, in this embodiment of this application, each third device in the at least one third device may be UE or a network-side device.

Optionally, in this embodiment of the application, each third device in the at least one third device corresponds to at least one third reference signal sequence.

It can be understood that the number of third devices is less than or equal to the number of third reference signal sequences

For each third device in the at least one third device, the second device may receive one third reference signal sequence or a plurality of third reference signal sequences from one third device.

Step 402: The second device performs a third operation based on each third reference signal sequence to obtain a corresponding fourth reference signal sequence.

Optionally, in this embodiment of the application, the second device may perform a third operation based on the 1st third reference signal sequence to obtain a fourth reference signal sequence corresponding to the 1st third reference signal sequence, perform a third operation based on the 2nd third reference signal sequence to obtain a fourth reference signal sequence corresponding to the 2nd third reference signal sequence, and so on, until the third operation is performed based on the last third reference signal sequence to obtain a fourth reference signal sequence corresponding to the last third reference signal sequence, so as to obtain at least one fourth reference signal sequence.

Optionally, in this embodiment of the application, the third operation includes at least one of the following:
adding noise, superimposing the at least one third reference signal sequence, and splicing the at least one third reference signal sequence.

Step 403: The second device sends a second channel estimation value to the first device.

In this embodiment of the application, the second channel estimation value is a channel estimation value obtained by the second device based on a fourth reference signal sequence corresponding to the first device; and the second channel estimation value is used for training performed by the first device to obtain a target neural network. The target neural network is used for generating a target reference signal sequence.

According to the reference signal sequence generation method provided in this embodiment of the application, the second device can receive at least one third reference signal sequence from the at least one third device, and perform a third operation based on each third reference signal sequence to obtain a corresponding fourth reference signal sequence, so that the second device can send a second channel estimation value to the first device in the at least one third device. The second channel estimation value is a channel estimation value obtained by the second device through channel estimation based on a fourth reference signal sequence corresponding to the first device, and the second channel estimation value is used for performing training by the first device to obtain a target neural network. The target neural network is used for generating the target reference signal sequence. Because the second device can receive at least one third reference signal sequence and obtain a corresponding fourth reference signal sequence based on each third reference signal sequence, the second device can send, to the first device, a second channel estimation value used for obtaining the target neural network through training (the target neural network is used for generating the target reference signal sequence). In this way, the first device can obtain the target neural network through training, and obtain a target reference signal sequence based on the target neural network, instead of generating a reference signal sequence by using a PN sequence (or a Zadoff-Chu sequence). Therefore, the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for the second device.

It should be noted that, for the reference signal sequence generation method provided in the embodiments of this application, the execution body may be a second device, or a control module for executing the reference signal sequence generation method in the second device. In the embodiments of this application, the reference signal sequence generation method being performed by the second device is used as an example to describe the second device provided in the embodiments of this application.

FIG. 8 is a possible schematic structural diagram of a reference signal sequence generation apparatus included in the embodiments of this application. The reference signal sequence generation apparatus is a first reference signal sequence generation apparatus. As shown in FIG. 8, the first reference signal sequence generation apparatus 50 may include an obtaining module 51.

The obtaining module 51 is configured to obtain a target neural network; and obtain a target reference signal sequence based on the target neural network. The target neural network includes N target neuron groups, and each target neuron group corresponds to one target weight parameter. The target reference signal sequence includes N target elements in one-to-one correspondence to N target weight parameters, where N is a positive integer.

In a possible implementation, each target neuron group in the N target neuron groups includes L first neurons and M second neurons, each first neuron corresponds to one first real parameter, and each second neuron corresponds to one first imaginary parameter, Land M being positive integers; and the target weight parameter corresponding to each target neuron group is determined based on L first real parameters and M first imaginary parameters.

In a possible implementation, the target neural network is obtained through training based on channel information of the first reference signal sequence generation apparatus 50. The channel information includes any one of the following: a channel vector and a channel matrix.

In a possible implementation, the first reference signal sequence generation apparatus 50 further includes: a training module. The training module is configured to perform training on a first neural network by using the channel information to obtain the target neural network.

In a possible implementation, the channel information includes Q first elements, where Q is a positive integer. The first reference signal sequence generation apparatus 50 provided in this embodiment of this application further includes a generating module and a determining module. The generating module is configured to input Q first elements into the first neural network to generate a first reference signal sequence; the determining module is configured to determine a target loss function based on a target channel estimation value, where the target channel estimation value is obtained through channel estimation based on the first reference signal sequence; and the training module is specifically configured to perform training on the first neural network based on the target loss function determined by the determining module. The target loss function is used for representing a deviation degree between the target channel estimation value and a channel true value; and the channel true value is determined based on the channel information.

In a possible implementation, the first neural network includes N first neuron groups, and each first neuron group corresponds to one first weight parameter; and the first reference signal sequence is obtained through a multiplication operation based on the Q first elements and N first weight parameters.

In a possible implementation, each first element corresponds to one second real parameter and one second imaginary parameter; and the first reference signal sequence includes N second elements; and the generating module is specifically configured to input Q second real parameters and Q second imaginary parameters into the first neural network to obtain N third real parameters and N third imaginary parameters for outputting; and determine the N second elements based on the N third real parameters and the N third imaginary parameters.

In a possible implementation, the target loss function includes a first parameter between the target channel estimation value and the channel true value. The first parameter includes at least one of the following: mean squared error, normalized mean squared error, norm, correlation coefficient, and cosine similarity.

In a possible implementation, the target loss function includes a second parameter obtained after performing a first operation using the target channel estimation value. The first operation is a subsequent operation of channel estimation in a wireless communication system; and the second parameter is used to represent at least one of the following: wireless communication transmission accuracy rate and wireless communication transmission efficiency.

In a possible implementation, the first neural network includes: R second neural networks, R being a positive integer greater than 1; and the generating module is specifically configured to determine R element groups based on the Q first elements, where different element groups include different first elements; input each element group into each second neural network to generate a second reference signal sequence corresponding to each second neural network, so as to obtain R second reference signal sequences; and perform a second operation based on the R second reference signal sequences to generate the first reference signal sequence; where the second operation includes at least one of the following: adding noise, superimposing the R second reference signal sequences, and splicing the R second reference signal sequences.

In a possible implementation, the target channel estimation value includes any one of the following: a first channel estimation value obtained by the first reference signal sequence generation apparatus 50 through channel estimation based on the first reference signal sequence; and a second channel estimation value received by the first reference signal sequence generation apparatus 50 from a second reference signal sequence generation apparatus. The second channel estimation value is a channel estimation value obtained by the second reference signal sequence generation apparatus through channel estimation based on the first reference signal sequence in a case that the second reference signal sequence generation apparatus receives the first reference signal sequence from the first reference signal sequence generation apparatus 50.

In a possible implementation, the training module is specifically configured to perform training on the first neural network by using the channel information based on a target constraint condition. The target constraint condition includes any one of the following that: a power value corresponding to each target weight parameter is a first preset value; and a total power value corresponding to the N target weight parameters is less than or equal to a second preset value.

In a possible implementation, the first reference signal sequence generation apparatus 50 provided in this embodiment of this application further includes a determining module. The determining module is configured to determine the first neural network based on a first physical parameter. The first physical parameter includes at least one of the following: bundling size; RB; PRB; the number of MUs; and density in a time-frequency domain in a time-frequency domain pattern of a reference signal sequence.

In a possible implementation, the channel information is received by the first reference signal sequence generation apparatus 50 from a second reference signal sequence generation apparatus.

In a possible implementation, the obtaining module 51 is specifically configured to determine the target neural network based on a second physical parameter. The second physical parameter includes at least one of the following: bundling size; RB; PRB; the number of MUs; and density in a time-frequency domain in a time-frequency domain pattern of a reference signal sequence.

In a possible implementation, the first reference signal sequence generation apparatus 50 provided in this embodiment of this application further includes a sending module. The sending module is configured to send first signaling to a second reference signal sequence generation apparatus, where the first signaling carries the target reference signal sequence, or an identifier of the target reference signal sequence, or information obtained by compressing the target reference signal sequence.

In a possible implementation, the first signaling includes at least one of the following: RRC signaling; layer 1 signaling of PDCCH; PDSCH information; MAC signaling; SIB; layer 1 signaling of PUCCH; target message information of PRACH; PUSCH information; XN interface signaling; PC5 interface signaling; and sidelink interface instruction. The target message includes at least one of the following: message MSG 1 information, MSG 2 information, MSG 3 information, MSG 4 information, MSG A information, and MSG B information.

According to the reference signal sequence generation apparatus provided in the embodiments of the application, because the first reference signal sequence generation apparatus obtains the target reference signal sequence based on the target neural network, and the N target weight parameters of the target neural network are in one-to-one correspondence to the N target elements, instead of generating a reference signal sequence by using a PN sequence (or a Zadoff-Chu sequence), the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for the first reference signal sequence generation apparatus.

The first reference signal sequence generation apparatus in this embodiment of this application may be an apparatus, or an apparatus or electronic device having an operating system, or may be a component, an integrated circuit, or a chip in the terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The first reference signal sequence generation apparatus provided in this embodiment of this application is capable of implementing the processes implemented in the method embodiments in FIG. 1 to FIG. 6, with the same technical effects achieved. To avoid repetition, details are not described herein again.

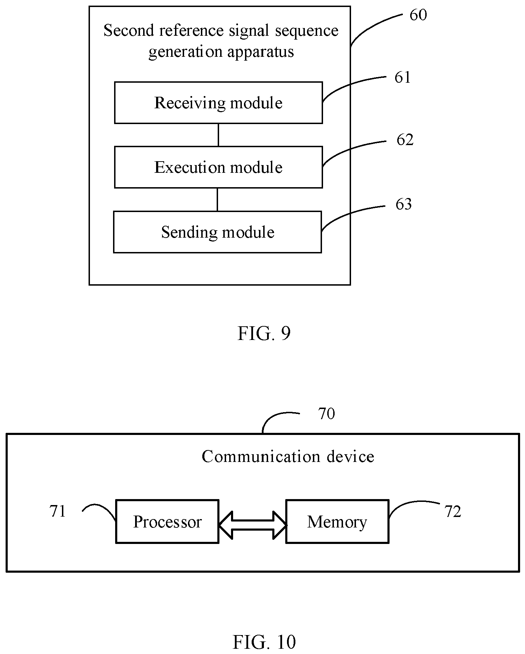

FIG. 9 is a possible schematic structural diagram of a reference signal sequence generation apparatus included in the embodiments of this application. The reference signal sequence generation apparatus is a second reference signal sequence generation apparatus. As shown in FIG. 9, the second reference signal sequence generation apparatus 60 may include a receiving module 61, an execution module 62 and a sending module 63. The receiving module 61 is configured to receive at least one third reference signal sequence from at least one third reference signal sequence generation apparatus, where the at least one third reference signal sequence includes a first reference signal sequence sent by a first reference signal sequence generation apparatus in the at least one third reference signal sequence generation apparatus. The execution module 62 is configured to perform a third operation based on each third reference signal sequence received by the receiving module 61 to obtain a corresponding fourth reference signal sequence. The sending module 63 is configured to send a second channel estimation value to the first reference signal sequence generation apparatus. The second channel estimation value is a channel estimation value obtained by the second reference signal sequence generation apparatus 60 through channel estimation based on a fourth reference signal sequence corresponding to the first reference signal sequence generation apparatus; and the second channel estimation value is used for training performed by the first reference signal sequence generation apparatus to obtain a target neural network; and the target neural network is used for generating a target reference signal sequence.

In a possible implementation, the third operation includes at least one of the following: adding noise, superimposing the at least one third reference signal sequence, and splicing the at least one third reference signal sequence.

According to the reference signal sequence generation apparatus provided in this embodiment of the application, because the second reference signal sequence generation apparatus can receive at least one third reference signal sequence and obtain a corresponding fourth reference signal sequence based on each third reference signal sequence. In this way, the second reference signal sequence generation apparatus can send, to the first reference signal sequence generation apparatus, the second channel estimation value for training to obtain the target neural network (where the target neural network is used for generating the target reference signal sequence), so that the first reference signal sequence generation apparatus can obtain the target neural network through training and obtain the target reference signal sequence based on the target neural network, instead of generating a reference signal sequence by using a PN sequence (or a Zadoff-Chu sequence). Therefore, the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for second reference signal sequence generation apparatuses.

The second reference signal sequence generation apparatus in this embodiment of this application may be an apparatus, or an apparatus or electronic device having an operating system, or may be a component, an integrated circuit, or a chip in the terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The second reference signal sequence generation apparatus provided in this embodiment of this application is capable of implementing the processes implemented in the method embodiments in FIG. 7, with the same technical effects achieved. To avoid repetition, details are not described herein again.

Optionally, in the embodiments of this application, as shown in FIG. 10, an embodiment of this application further provides a communication device 70, including a processor 71, a memory 72, and a program or instructions stored in the memory 72 and executable on the processor 71. For example, when the communication device 70 is a terminal and when the program or the instructions are executed by the processor 71, the processes of the foregoing embodiments of the reference signal sequence generation method are implemented, with the same technical effects achieved. When the communication device 70 is a network-side device and the program or the instructions are executed by the processor 71, the processes of the foregoing embodiment of the reference signal sequence generation method are implemented, with the same technical effects achieved. To avoid repetition, details are not described herein again.

An embodiment of this application further provides a terminal, including a processor and a communication interface. The processor is configured to obtain a target neural network; and obtain a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer.

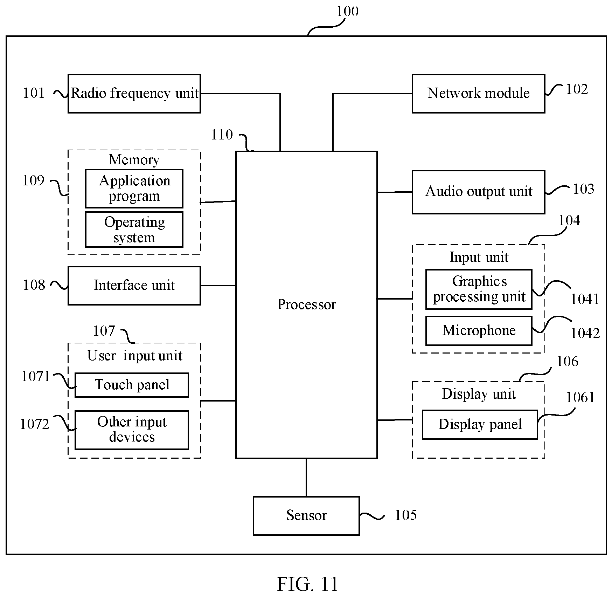

The terminal embodiments correspond to the foregoing terminal-side method embodiments, and the implementation processes and implementations of the foregoing method embodiments can be applied to the terminal embodiments, with the same technical effects achieved. Specifically, FIG. 11 is a schematic diagram of a hardware structure of a terminal for implementing the embodiments of this application.

The terminal 100 includes but is not limited to at least part of components such as a radio frequency unit 101, a network module 102, an audio output unit 103, an input unit 104, a sensor 105, a display unit 106, a user input unit 107, an interface unit 108, a memory 109, and a processor 110.

Persons skilled in the art can understand that the terminal 100 may further include a power supply (for example, a battery) supplying power to the components, and the power supply may be logically connected to the processor 110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, and the like. The user input unit 107 may include a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function key (such as a volume control key or a power on/off key), a trackball, a mouse, a joystick, and the like. Details are not described herein.

In this embodiment of this application, the radio frequency unit 101 receives downlink data from a network-side device, and then sends the downlink data to the processor 110 for processing; and also sends uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may include a program or instruction storage area and a data storage area. The program or instruction storage area may store an operating system, an application program or instruction required by at least one function (for example, a sound playback function or an image playback function), and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 110 may include one or more processing units. Optionally, an application processor and a modem processor may be integrated in the processor 110. The application processor primarily processes an operating system, user interfaces, application programs or instructions, and the like. The modem processor primarily processes radio communication, for example, being a baseband processor. It can be understood that the modem processor may alternatively be not integrated in the processor 110.

The processor 110 is configured to obtain a target neural network; and obtain a target reference signal sequence based on the target neural network.

The target neural network includes N target neuron groups, and each target neuron group corresponds to one target weight parameter. The target reference signal sequence includes N target elements in one-to-one correspondence to N target weight parameters, where N is a positive integer.

In the terminal provided in this embodiment of the application, because the terminal obtains the target reference signal sequence based on the target neural network, and the N target weight parameters of the target neural network are in one-to-one correspondence to the N target elements, instead of generating a reference signal sequence by using a PN sequence (or a Zadoff-Chu sequence), the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for terminals.

Optionally, in this embodiment of this application, the processor 110 is further configured to perform training on the first neural network by using the channel information to obtain the target neural network.

Optionally, in this embodiment of this application, the channel information includes Q first elements, where Q is a positive integer.

The processor 110 is specifically configured to input Q first elements into the first neural network to generate a first reference signal sequence; and determine a target loss function based on a target channel estimation value, where the target channel estimation value is obtained through channel estimation based on the first reference signal sequence; and perform training on the first neural network based on the target loss function.

The target loss function is used for representing a deviation degree between the target channel estimation value and a channel true value; and the channel true value is determined based on the channel information.

Optionally, in this embodiment of this application, each first element corresponds to one second real parameter and one second imaginary parameter; and the first reference signal sequence includes N second elements.

The processor 110 is specifically configured to input Q second real parameters and Q second imaginary parameters into the first neural network to obtain N third real parameters and N third imaginary parameters for outputting; and determine the N second elements based on the N third real parameters and the N third imaginary parameters.

Optionally, in this embodiment of this application, the first neural network includes: R second neural networks, R being a positive integer greater than 1.

The processor 110 is specifically configured to determine R element groups based on the Q first elements, where different element groups include different first elements; input each element group into each second neural network to generate a second reference signal sequence corresponding to each second neural network, so as to obtain R second reference signal sequences; and perform a second operation based on the R second reference signal sequences to generate the first reference signal sequence; where
the second operation includes at least one of the following: adding noise, superimposing the R second reference signal sequences, and splicing the R second reference signal sequences.

Optionally, in this embodiment of this application, the processor 110 is specifically configured to perform training on the first neural network by using the channel information based on a target constraint condition.

The target constraint condition includes any one of the following that: a power value corresponding to each target weight parameter is a first preset value; and a total power value corresponding to the N target weight parameters is less than or equal to a second preset value.

Optionally, in this embodiment of this application, the processor 110 is further configured to, for the device, determine the first neural network based on a first physical parameter.

The first physical parameter includes at least one of the following: bundling size; RB; PRB; the number of MUs; and density in a time-frequency domain in a time-frequency domain pattern of a reference signal sequence.

Optionally, in this embodiment of this application, the processor 110 is specifically configured to determine the target neural network based on a second physical parameter.

The second physical parameter includes at least one of the following: bundling size; RB; PRB; the number of MUs; and density in a time-frequency domain in a time-frequency domain pattern of a reference signal sequence.

Optionally, in this embodiment of this application, the radio frequency unit 101 is configured to: send first signaling to the second device, where the first signaling carries the target reference signal sequence, or an identifier of the target reference signal sequence, or information obtained by compressing the target reference signal sequence.

An embodiment of this application further provides a terminal, including a processor and a communication interface, where the communication interface is configured to receive at least one third reference signal sequence from at least one third device, and the at least one third reference signal sequence includes a first reference signal sequence sent by a first device in the at least one third device. The processor is configured to perform a third operation based on each third reference signal sequence to obtain a corresponding fourth reference signal sequence. The communication interface is further configured to send a second channel estimation value to the first device. The second channel estimation value is a channel estimation value obtained by the terminal based on a fourth reference signal sequence corresponding to the first device; and the second channel estimation value is used for training performed by the first device to obtain a target neural network. The target neural network is used for generating a target reference signal sequence. The terminal embodiments correspond to the foregoing terminal-side method embodiments, and the implementation processes and implementations of the foregoing method embodiments can be applied to the terminal embodiments, with the same technical effects achieved. Specifically, FIG. 11 is a schematic diagram of a hardware structure of a terminal for implementing the embodiments of this application.

The terminal 100 includes but is not limited to at least part of components such as a radio frequency unit 101, a network module 102, an audio output unit 103, an input unit 104, a sensor 105, a display unit 106, a user input unit 107, an interface unit 108, a memory 109, and a processor 110.

Persons skilled in the art can understand that the terminal 100 may further include a power supply (for example, a battery) supplying power to the components, and the power supply may be logically connected to the processor 110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, and the like. The user input unit 107 may include a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function key (such as a volume control key or a power on/off key), a trackball, a mouse, a joystick, and the like. Details are not described herein.

In this embodiment of this application, the radio frequency unit 101 receives downlink data from a network-side device, and then sends the downlink data to the processor 110 for processing; and also sends uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may include a program or instruction storage area and a data storage area. The program or instruction storage area may store an operating system, an application program or instruction required by at least one function (for example, a sound playback function or an image playback function), and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 110 may include one or more processing units. Optionally, an application processor and a modem processor may be integrated in the processor 110. The application processor primarily processes an operating system, user interfaces, application programs or instructions, and the like. The modem processor primarily processes radio communication, for example, being a baseband processor. It can be understood that the modem processor may alternatively be not integrated in the processor 110.

The radio frequency unit 101 is configured to: receive at least one third reference signal sequence from at least one third device, where the at least one third reference signal sequence includes a first reference signal sequence sent by a first device in the at least one third device.

The processor 110 is configured to perform a third operation based on each third reference signal sequence to obtain a corresponding fourth reference signal sequence; and
the radio frequency unit 101 is further configured to send a second channel estimation value to the first device.

The second channel estimation value is a channel estimation value obtained by the terminal based on a fourth reference signal sequence corresponding to the first device; and the second channel estimation value is used for training performed by the first device to obtain a target neural network. The target neural network is used for generating a target reference signal sequence.

According to the terminal provided in this embodiment of the application, because the terminal can receive at least one third reference signal sequence and obtain a corresponding fourth reference signal sequence based on each third reference signal sequence, the terminal can send, to the first device, a second channel estimation value for obtaining the target neural network through training (the target neural network is used for generating the target reference signal sequence). In this way, the first device can obtain the target neural network through training, and obtain a target reference signal sequence based on the target neural network, instead of generating a reference signal sequence by using a PN sequence (or a Zadoff-Chu sequence). Therefore, the anti-noise capability and anti-interference capability of the target reference signal sequence are stronger than the anti-noise capability and anti-interference capability of the reference signal sequence, so as to reduce impact received on the target reference signal sequence when passing through the channel, thereby improving communication reliability for terminals.

An embodiment of this application further provides a network-side device, including a processor and a communication interface. The processor is configured to obtain a target neural network; and obtain a target reference signal sequence based on the target neural network; where the target neural network includes N target neuron groups, and each target neuron group corresponds to one target weight parameter; and the target reference signal sequence includes N target elements in one-to-one correspondence to N target weight parameters, where N is a positive integer; or the communication interface is configured to receive at least one third reference signal sequence from at least one third device, and the at least one third reference signal sequence includes a first reference signal sequence sent by a first device. The processor is configured to perform a third operation based on each third reference signal sequence to obtain a corresponding fourth reference signal sequence; and the communication interface is further configured to send a second channel estimation value to the first device. The second channel estimation value is a channel estimation value obtained by the network-side device based on a fourth reference signal sequence corresponding to the first device; and the second channel estimation value is used for training performed by the first device to obtain a target neural network. The target neural network is used for generating a target reference signal sequence.

The network-side device embodiments correspond to the foregoing network-side device-side method embodiments, and the implementation processes and implementations of the foregoing method embodiments can be applied to the network-side device embodiments, with the same technical effects achieved.

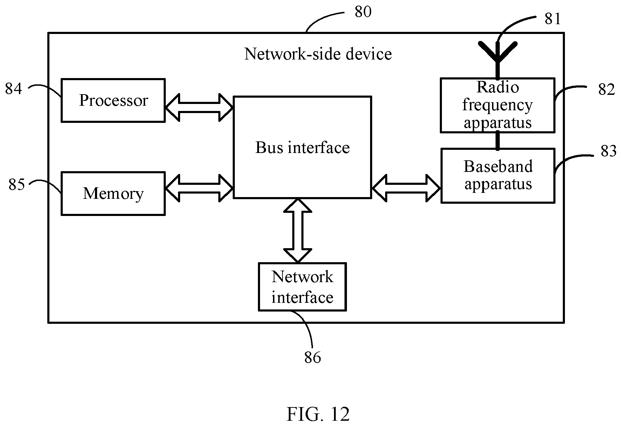

Specifically, an embodiment of this application further provides a network-side device. As shown in FIG. 12, the network-side device 80 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The frequency band processing apparatus may be located in the baseband apparatus 83. The method performed by the network-side device in the foregoing embodiments may be implemented in the baseband apparatus 83, and the baseband apparatus 83 includes a processor 84 and a memory 85.

The baseband apparatus 83 may include, for example, at least one baseband board, where a plurality of chips are disposed on the baseband board. As shown in FIG. 12, one of the chips is, for example, the processor 84, connected to the memory 85, to invoke a program in the memory 85 to perform the operation of the network-side device shown in the foregoing method embodiment.

The baseband apparatus 83 may further include a network interface 86, configured to exchange information with the radio frequency apparatus 82, where the interface is, for example, a common public radio interface (Common Public Radio Interface, CPRI).

Specifically, the network-side device in this embodiment of the present invention further includes: instructions or a program stored in the memory 85 and executable on the processor 84. The processor 84 invokes the instructions or program in the memory 85 to execute the method executed by the modules shown in FIG. 12, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiments of the reference signal sequence generation method described above can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the reference signal sequence generation generation method, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A reference signal sequence generation method, wherein the method comprises:
obtaining, by a first device, a target neural network; and
obtaining, by the first device, a target reference signal sequence based on the target neural network; wherein
the target neural network comprises N target neuron groups, and each target neuron group corresponds to one target weight parameter; and
the target reference signal sequence comprises N target elements in one-to-one correspondence to N target weight parameters, wherein N is a positive integer.

2. The method according to claim 1, wherein each target neuron group in the N target neuron groups comprises L first neurons and M second neurons, each first neuron corresponds to one first real parameter, and each second neuron corresponds to one first imaginary parameter, Land M being positive integers; and
the target weight parameter corresponding to each target neuron group is determined based on L first real parameters and M first imaginary parameters.

3. The method according to claim 1, wherein the target neural network is obtained by training based on channel information of the first device; and
the channel information comprises any one of the following: a channel vector and a channel matrix.

4. The method according to claim 3, wherein before the obtaining, by a first device, a target neural network, the method further comprises:
performing, by the first device, training on a first neural network by using the channel information to obtain the target neural network.

5. The method according to claim 4, wherein the channel information comprises Q first elements, Q being a positive integer; and
the performing, by the first device, training on a first neural network by using the channel information comprises:
inputting, by the first device, the Q first elements into the first neural network to generate a first reference signal sequence;
determining, by the first device, a target loss function based on a target channel estimation value, wherein the target channel estimation value is obtained through channel estimation based on the first reference signal sequence; and
performing, by the first device, training on the first neural network based on the target loss function; wherein
the target loss function is used for representing a deviation degree between the target channel estimation value and a channel true value; and
the channel true value is determined based on the channel information.

6. The method according to claim 5, wherein the first neural network comprises N first neuron groups, and each first neuron group corresponds to one first weight parameter; and
the first reference signal sequence is obtained through a multiplication operation based on the Q first elements and N first weight parameters.

7. The method according to claim 5, wherein each first element corresponds to one second real parameter and one second imaginary parameter; and the first reference signal sequence comprises N second elements; and
the inputting, by the first device, the Q first elements into the first neural network to generate a first reference signal sequence comprises:
inputting, by the first device, Q second real parameters and Q second imaginary parameters into the first neural network to obtain N third real parameters and N third imaginary parameters for outputting; and
determining, by the first device, the N second elements based on the N third real parameters and the N third imaginary parameters.

8. The method according to claim 5, wherein the target loss function comprises: a first parameter between the target channel estimation value and the channel true value; and
the first parameter comprises at least one of the following: mean squared error, normalized mean squared error, norm, correlation coefficient, and cosine similarity.

9. The method according to claim 5, wherein the target loss function comprises: a second parameter obtained after performing a first operation using the target channel estimation value;
the first operation is a subsequent operation of channel estimation in a wireless communication system; and
the second parameter is used to represent at least one of the following: wireless communication transmission accuracy rate and wireless communication transmission efficiency.

10. The method according to claim 5, wherein the first neural network comprises: R second neural networks, R being a positive integer greater than 1; and
the inputting, by the first device, the Q first elements into the first neural network to generate a first reference signal sequence comprises:
determining, by the first device, R element groups based on the Q first elements, wherein different element groups comprise different first elements;
inputting, by the first device, each element group into each second neural network to generate a second reference signal sequence corresponding to each second neural network, so as to obtain R second reference signal sequences; and
performing, by the first device, a second operation based on the R second reference signal sequences to generate the first reference signal sequence; wherein
the second operation comprises at least one of the following:
adding noise, superimposing the R second reference signal sequences, and splicing the R second reference signal sequences.

11. The method according to claim 5, wherein the target channel estimation value comprises any one of the following:
a first channel estimation value obtained by the first device through channel estimation based on the first reference signal sequence; and
a second channel estimation value received by the first device from a second device; wherein
the second channel estimation value is a channel estimation value obtained by the second device through channel estimation based on the first reference signal sequence in a case that the second device receives the first reference signal sequence from the first device.

12. The method according to claim 4, wherein the performing, by the first device, training on a first neural network by using the channel information comprises:
performing, by the first device, training on the first neural network by using the channel information based on a target constraint condition; wherein
the target constraint condition comprises any one of the following that:
a power value corresponding to each target weight parameter is a first preset value; and
a total power value corresponding to the N target weight parameters is less than or equal to a second preset value.

13. The method according to claim 4, wherein before the performing, by the first device, training on a first neural network by using the channel information, the method further comprises:
determining, by the first device, the first neural network based on a first physical parameter; wherein
the first physical parameter comprises at least one of the following:
bundling size (bundling size);
resource block RB;
physical resource block PRB;
the number of multiple users MUs; and
density in a time-frequency domain in a time-frequency domain pattern (pattern) of a reference signal sequence.

14. The method according to claim 3, wherein the channel information is received by the first device from a second device.

15. The method according to claim 1, wherein the obtaining, by a first device, a target neural network comprises:
determining, by the first device, the target neural network based on a second physical parameter; wherein
the second physical parameter comprises at least one of the following:
bundling size;
RB;
PRB;
the number of MUs; and
density in a time-frequency domain in a time-frequency domain pattern of a reference signal sequence.

16. The method according to claim 1, wherein after the target reference signal sequence is generated, the method further comprises:
sending, by the first device, first signaling to a second device, wherein the first signaling carries the target reference signal sequence, or an identifier of the target reference signal sequence, or information obtained by compressing the target reference signal sequence.

17. The method according to claim 16, wherein the first signaling comprises at least one of the following:
radio resource control RRC signaling;
layer 1 signaling for physical downlink control channel PDCCH;
physical downlink shared channel PDSCH information;
medium access control control element MAC CE signaling;
system information block SIB;
layer 1 signaling for physical uplink control channel PUCCH;
target message information of physical random access channel PRACH;
physical uplink shared channel PUSCH information;
XN interface signaling;
PC5 interface signaling; and
sidelink (Sidelink) interface instruction; wherein
the target message comprises at least one of the following: message MSG 1 information, MSG 2 information, MSG 3 information, MSG 4 information, MSG A information, and MSG B information.

18. A reference signal sequence generation method, wherein the method comprises:
receiving, by a second device, at least one third reference signal sequence from at least one third device, wherein the at least one third reference signal sequence comprises a first reference signal sequence sent by a first device in the at least one third device;
performing, by the second device, a third operation based on each third reference signal sequence to obtain a corresponding fourth reference signal sequence; and
sending, by the second device, a second channel estimation value to the first device; wherein
the second channel estimation value is a channel estimation value obtained by the second device through channel estimation based on a fourth reference signal sequence corresponding to the first device; and the second channel estimation value is used for training performed by the first device to obtain a target neural network; and
the target neural network is used for generating a target reference signal sequence.

19. The method according to claim 18, wherein the third operation comprises at least one of the following:
adding noise, superimposing the at least one third reference signal sequence, and splicing the at least one third reference signal sequence.

20. A reference signal sequence generation apparatus, wherein the reference signal sequence generation apparatus is a first reference signal sequence generation apparatus, and the first reference signal sequence generation apparatus comprises: an obtaining module; wherein
the obtaining module is configured to obtain a target neural network; and obtain a target reference signal sequence based on the target neural network; wherein
the target neural network comprises N target neuron groups, and each target neuron group corresponds to one target weight parameter; and
the target reference signal sequence comprises N target elements in one-to-one correspondence to N target weight parameters, wherein N is a positive integer.

21. The reference signal sequence generation apparatus according to claim 20, wherein each target neuron group in the N target neuron groups comprises L first neurons and M second neurons, each first neuron corresponds to one first real parameter, and each second neuron corresponds to one first imaginary parameter, Land M being positive integers; and
the target weight parameter corresponding to each target neuron group is determined based on L first real parameters and M first imaginary parameters.

22. The reference signal sequence generation apparatus according to claim 20, wherein the target neural network is obtained through training based on the channel information of the first reference signal sequence generation apparatus; wherein
the channel information comprises any one of the following: a channel vector and a channel matrix.

23. The reference signal sequence generation apparatus according to claim 22, wherein the first reference signal sequence generation apparatus further comprises a training module; wherein
the training module performs training on a first neural network by using the channel information to obtain the target neural network.

24. The reference signal sequence generation apparatus according to claim 23, wherein the channel information comprises Q first elements, Q being a positive integer; and
the first reference signal sequence generation apparatus further comprises a generating module and a determining module; wherein
the generating module is configured to input the Q first elements into the first neural network to generate a first reference signal sequence;
the determining module is configured to determine a target loss function based on a target channel estimation value, wherein the target channel estimation value is obtained through channel estimation based on the first reference signal sequence; and
the training module is specifically configured to perform training on the first neural network based on the target loss function determined by the determining module; wherein
the target loss function is used for representing a deviation degree between the target channel estimation value and a channel true value; and
the channel true value is determined based on the channel information.

25. The reference signal sequence generation apparatus according to claim 24, wherein the first neural network comprises N first neuron groups, and each first neuron group corresponds to one first weight parameter; and
the first reference signal sequence is obtained through a multiplication operation based on the Q first elements and N first weight parameters.

26. The reference signal sequence generation apparatus according to claim 24, wherein each first element corresponds to one second real parameter and one second imaginary parameter; and the first reference signal sequence comprises N second elements; and
the generating module is specifically configured to input Q second real parameters and Q second imaginary parameters into the first neural network to obtain N third real parameters and N third imaginary parameters for outputting; and determine the N second elements based on the N third real parameters and the N third imaginary parameters.

27. The reference signal sequence generation apparatus according to claim 24, wherein the target loss function comprises: a first parameter between the target channel estimation value and the channel true value; and
the first parameter comprises at least one of the following: mean squared error, normalized mean squared error, norm, correlation coefficient, and cosine similarity.

28. The reference signal sequence generation apparatus according to claim 24, wherein the target loss function comprises: a second parameter obtained after performing a first operation using the target channel estimation value; wherein
the first operation is a subsequent operation of channel estimation in a wireless communication system; and
the second parameter is used to represent at least one of the following: wireless communication transmission accuracy rate and wireless communication transmission efficiency.

29. The reference signal sequence generation apparatus according to claim 24, wherein the first neural network comprises: R second neural networks, R being a positive integer greater than 1; and
the generating module is specifically configured to determine R element groups based on the Q first elements, wherein different element groups comprise different first elements; input each element group into each second neural network to generate a second reference signal sequence corresponding to each second neural network, so as to obtain R second reference signal sequences; and perform a second operation based on the R second reference signal sequences to generate the first reference signal sequence; wherein
the second operation comprises at least one of the following:
adding noise, superimposing the R second reference signal sequences, and splicing the R second reference signal sequences.

30. The reference signal sequence generation apparatus according to claim 24, wherein the target channel estimation value comprises any one of the following:
a first channel estimation value obtained by the first reference signal sequence generation apparatus through channel estimation based on the first reference signal sequence; and
a second channel estimation value received by the first reference signal sequence generation apparatus from a second reference signal sequence generation apparatus, wherein
the second channel estimation value is a channel estimation value obtained by the second reference signal sequence generation apparatus through channel estimation based on the first reference signal sequence in a case that the second reference signal sequence generation apparatus receives the first reference signal sequence from the first reference signal sequence generation apparatus.

31. The reference signal sequence generation apparatus according to claim 23, wherein the training module is specifically configured to perform training on the first neural network by using the channel information based on a target constraint condition; wherein
the target constraint condition comprises any one of the following that:
a power value corresponding to each target weight parameter is a first preset value; and
a total power value corresponding to the N target weight parameters is less than or equal to a second preset value.

32. The reference signal sequence generation apparatus according to claim 23, wherein the first reference signal sequence generation apparatus further comprises a determining module; wherein
the determining module is configured to determine the first neural network based on a first physical parameter; wherein
the first physical parameter comprises at least one of the following:
bundling size;
RB;
PRB;
the number of MUs; and
density in a time-frequency domain in a time-frequency domain pattern of a reference signal sequence.

33. The reference signal sequence generation apparatus according to claim 22, wherein the channel information is received by the first reference signal sequence generation apparatus from a second reference signal sequence generation apparatus.

34. The reference signal sequence generation apparatus according to claim 20, wherein the obtaining module is specifically configured to determine the target neural network based on a second physical parameter; wherein
the second physical parameter comprises at least one of the following:
bundling size;
RB;
PRB;
the number of MUs; and
density in a time-frequency domain in a time-frequency domain pattern of a reference signal sequence.

35. The reference signal sequence generation apparatus according to claim 20, wherein the first reference signal sequence generation apparatus further comprises a sending module; wherein
the sending module is configured to send first signaling to a second reference signal sequence generation apparatus, wherein the first signaling carries the target reference signal sequence, or an identifier of the target reference signal sequence, or information obtained by compressing the target reference signal sequence.

36. The reference signal sequence generation apparatus according to claim 35, wherein the first signaling comprises at least one of the following:
radio resource control RRC signaling;
layer 1 signaling for physical downlink control channel PDCCH;
physical downlink shared channel PDSCH information;
medium access control control element MAC CE signaling;
system information block SIB;
layer 1 signaling for physical uplink control channel PUCCH;
target message information of physical random access channel PRACH;
physical uplink shared channel PUSCH information;
XN interface signaling;
PC5 interface signaling; and
sidelink (Sidelink) interface instruction; wherein
the target message comprises at least one of the following: message MSG 1 information, MSG 2 information, MSG 3 information, MSG 4 information, MSG A information, and MSG B information.

37. A reference signal sequence generation apparatus, wherein the reference signal sequence generation apparatus is a second reference signal sequence generation apparatus, and the second reference signal sequence generation apparatus comprises:
a receiving module, an execution module and a sending module; wherein
the receiving module is configured to receive at least one third reference signal sequence from at least one third reference signal sequence generation apparatus, wherein the at least one third reference signal sequence comprises a first reference signal sequence sent by a first reference signal sequence generation apparatus in the at least one third reference signal sequence generation apparatus;
the execution module is configured to perform a third operation based on each third reference signal sequence received by the receiving module to obtain a corresponding fourth reference signal sequence; and
the sending module is configured to send a second channel estimation value to the first reference signal sequence generation apparatus; wherein
the second channel estimation value is a channel estimation value obtained by the second reference signal sequence generation apparatus through channel estimation based on a fourth reference signal sequence corresponding to the first reference signal sequence generation apparatus; and the second channel estimation value is used for training performed by the first reference signal sequence generation apparatus to obtain a target neural network; and
the target neural network is used for generating a target reference signal sequence.

38. The reference signal sequence generation apparatus according to claim 37, wherein the third operation comprises at least one of the following:
adding noise, superimposing the at least one third reference signal sequence, and splicing the at least one third reference signal sequence.

39. A terminal, comprising a processor, a memory, and a program or instructions stored in the memory and executable on the processor, wherein when the program or the instructions are executed by the processor, the steps of the reference signal sequence generation method according to any one of claims 1 to 17 are implemented, or the steps of the reference signal sequence generation method according to claim 18 or 19 are implemented.

40. A network-side device, comprising a processor, a memory, and a program or instructions stored in the memory and executable on the processor, wherein when the program or the instructions are executed by the processor, the steps of the reference signal sequence generation method according to any one of claims 1 to 17 are implemented, or the steps of the reference signal sequence generation method according to claim 18 or 19 are implemented.

41. A readable storage medium, wherein the readable storage medium stores a program or instructions, and when the program or the instructions are executed by a processor, the steps of the reference signal sequence generation method according to any one of claims 1 to 17 are implemented, or the steps of the reference signal sequence generation method according to claim 18 or 19 are implemented.

42. A chip, wherein the chip comprises a processor and a communication interface, wherein the communication interface is coupled to the processor, and the processor is configured to execute a program or instructions to implement the steps of the reference signal sequence generation method according to any one of claims 1 to 17 or the steps of the reference signal sequence generation method according to claim 18 or 19.

43. A computer program product, wherein the computer program product is executed by at least one processor to perform the steps of the reference signal sequence generation method according to any one of claims 1 to 17 or the steps of the reference signal sequence generation method according to claim 18 or 19.

44. An electronic device, wherein the electronic device is configured to perform the steps of the reference signal sequence generation method according to any one of claims 1 to 17.
